# EUROPEAN PATENT SPECIFICATION

(11) **EP 0 563 365 B1**
(45) Date of publication and mention of the grant of the patent: **05.11.1997**
(21) Application number: 92922427.7
(22) Date of filing: 13.10.1992
(51) Int. Cl.: C07F 7/28, C07F 7/10, C08F 4/602, C07F 17/00, C08F 10/00

(54) **PREPARATION OF METAL COORDINATION COMPLEX**
Verfahren zur Herstellung von Metall-Koordinationskomplexen
PREPARATION DE COMPLEXES DE COORDINATION DE METAUX

(30) Priority: 15.10.1991 US 778432; 15.10.1991 US 778433
(43) Date of publication of application: 06.10.1993
(73) Proprietor: THE DOW CHEMICAL COMPANY, Midland, Michigan 48640 (US)
(72) Inventor: NICKIAS, Peter, N., Midland, MI 48642 (US); DEVORE, David, D., Midland, MI 48642 (US); WILSON, David, R., Midland, MI 48640 (US)
(74) Representative: Smulders, Theodorus A.H.J., Ir.
(86) International application number: US9208730
(87) International publication number: WO9308199

(56) References cited:
- EP-A- 0 416 815
- EP-A- 0 418 044
- EP-A- 0 420 436
- WO-A-92/00333
- CHEMICAL ABSTRACTS, vol. 67, 1967, Columbus, Ohio, US; abstract no. 44131f, MINSKER, K.S. ET AL. page 4163 ;

## Description

The present invention relates to a method for preparing certain metal coordination complexes. More particularly the present invention relates to such a method that results in improved yields and simplified isolation of the metal complex.

The metal coordination complexes to which the present process may be applied comprise a metal that is bound to a single cycopentadienyl or substituted cyclopentadienyl group by both a η⁵ bond and a divalent bridging group. These complexes are uniquely suited for use as catalysts in olefin polymerizations and to polymerize vinylaromatic monomers and olefins other than vinylaromatic monomers to prepare random copolymers useful as molding resins and in the preparation of films and foams for packing or other applications.

Complexes and catalytic species that may be prepared according to the present invention, referred to as constrained geometry complexes, are e.g. disclosed in HP-A-0 416 815. In the foregoing reference the metal complexes were prepared by reacting a metal compound such as TiCl₄ with a dilithiocyclopentadienylamidosilane or similar dianionic salt compound. Such salt compounds were prepared by reaction of an alkali metal cyclopentadienide or similar compound with a dichlorosilane followed by reaction with an amine or a lithium amide.

EP-A-0 420 436 describes a process wherein a cyclopentadienyl lithium compound is reacted with a dihalo compound to provide a product wherein a monohalo substituent is covalently bound to the cyclopentadienyl compound. This product is subsequently reacted with a lithium salt and finally with an alkyl lithium reagent to provide a dilithium salt of a cyclopentadienyl compound.

In WO-A-920333, a document citable under Art. 54(3) EPC, a similar process is described.

The three above-mentioned prior art processes relate to indirect processes first forming a metallated derivative which metallated derivative is contacted with a metal compound.

This reaction sequence has proven to be more complex and inefficient than is desired. In particular, incorporation of the cyclopentadienyl group into the desired structure early in the reaction sequence has proven undesirable because the synthetic sequence is apparently less efficient, and losses of the most expensive reagent are increased. Consequently, an improved synthesis of these commercially valuable catalyst components is desired.

### Summary of the invention

According to the present invention there is provided a process for preparing a metal coordination complex corresponding to the formula: 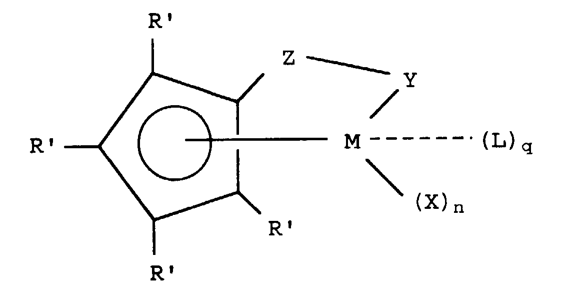 wherein
R' each occurrence is independently selected from the group consisting of hydrogen, hydrocarbyl, silyl, germyl, cyano, halo and combinations thereof having up to 20 non-hydrogen atoms or two or more R' groups together may form a ring;
X each occurrence independently is selected from the group consisting of hydride, halo, hydrocarbyl, silyl, germyl, hydrocarbyloxy, amide, phosphide, sulfide, siloxy and combinations thereof having up to 20 non-hydrogen atoms, and C₁₋₄ di-hydrocarbylamino- or C₁₋₄ di-hydrocarbylphosphinosubstituted C₁₋₁₀ hydrocarbyl groups;
Y is -O-, -S-, -NR*-, or -PR*-;
M is a Group 4 metal; and
Z is SiR*₂, CR*₂, SiR*₂SiR*₂, CR*₂CR*₂, CR*=CR*, CR*₂SiR*₂, GeR*₂ or BR*;
wherein:
R* each occurrence is independently selected from the group consisting of hydrogen, cyano, halogen, and hydrocarbyl, silyl, siloxy, and halogenated hydrocarbyl groups having up to 20 non-hydrogen atoms, and combinations thereof, or two or more R* groups from Z, or both Y and Z form a fused ring system;
n is 1 or 2; and
L is a neutral group associated with the complex with q being a rational number from 0 to 3;
   said process comprising:
   contacting a substituted cyclopentadiene compound corresponding to the formule: Cp*H-Z-YH;
wherein:
Cp* is 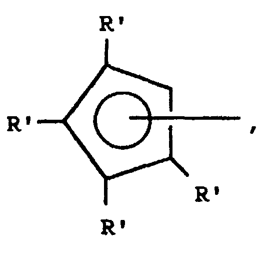 and Z and Y are as previously defined, with a metal compound corresponding to the formula: MXₘL_{q}, wherein M, X, L and q are as above defined, and m is equal to n+2.

In a preferred embodiment Y is NR* wherein R* is hydrogen, an alkyl, an aryl, a silyl, a halogenated alkyl or a halogenated aryl group having up to 20 non-hydrogen atoms.

Most preferably, the metal coordination complex in a process according to any one of claims 1-5, is
(N-t-butylamino)(dimethyl)(η⁵-2,3,4,5-tetramethylcyclopentadienyl)silane zirconium dichloride,
(N-t-butylamido) (dimethyl) (η⁵-2,3,4,5-tetramethylcyclopentadienyl)silane titanium dichloride,
(N-t-butylamido)(dimethyl)(η⁵-2,3,4,5-tetramethylcyclopentadienyl)silane zirconium dibenzyl, or
(N-t-butylamido)(dimethyl)(η⁵-2,3,4,5-tetramethylcyclopentadienyl)silane titanium dibenzyl.

This process comprises contacting a substituted cyclopentadiene compound directly with a metal compound corresponding to the formula: MXₘL_{q}, wherein M, X, L and q are as above defined, and m is equal to n+2.

In the direct method of the invention the substituted cyclopentadiene compound is contacted with the metal compound corresponding to the formula: MXₘL_{q},
wherein X in at least two occurrences X is a hydride, amide or phosphide group, or a hydrocarbyl, or a hydrocarbyl group substituted with one or more halo, silyl, germyl, hydrocarbyloxy, amide, phosphide, sulfide, or siloxy groups.

Further according to the present invention there is also provided a process for preparing the above metal coordination complex of formula 1, by the following steps:
1) contacting a halogenated compound of the formula: X'ZYH,
   wherein Z and Y are as previously defined, and X' is halo, with a metal cyclopentadienyl compound or a derivative thereof corresponding to the formula: (X)ₜ(L)ₛM'ᵤCp*H,
   wherein M' independently each occurrence is a metal selected from the group consisting of alkali metals, alkaline earth metals, Group 12 metals, Group 14 metals or metalloids, aluminum, and copper; and Cp*, X and L are as previously defined, and t, s, and u, independently each occurrence, are rational numbers from 0 to 3, to form the substituted cyclopentadiene compound corresponding to the formula: Cp*H-Z-YH; and
2) thereafter, contacting the reaction product of step 1) with the aforementioned metal compound corresponding to the formula: MXₘL_{q}.

The process of the direct method involves the protonation of the X groups of the metal compound, by means of acidic hydrogen groups on the neutral aminocyclopentadienylsilane-, phosphinocyclopentadienylsilane- or similar ligand. Preferred metal compounds for use in the process include compounds wherein X is benzyl, neopentyl, trimethylsilylmethyl, or ring alkyl-, or amino-substituted benzyl compounds, such as 2-methylbenzyl and 2-dimethylaminobenzyl. A most preferred metal compound is tetrabenzyl titanium. Also preferably, M is titanium (IV) or zirconium (IV).

Once having been prepared, if the metal of the metal coordination complex is not in its highest oxidation state and a higher oxidation state is desired, a noninterfering oxidizing agent may thereafter be contacted with the metal coordination complex to raise the oxidation state of the metal. The oxidation is accomplished merely by contacting the metal coordination complex and oxidizing agent, utilizing solvents and reaction conditions used in the preparation of the complex itself. By the term "noninterfering oxidizing agent" is meant a compound having an oxidation potential sufficient to raise the metal oxidation state without interfering with the desired complex formation or subsequent polymerization processes. Particularly suitable noninterfering oxidizing agents are AgCl, PbCl₂ or an organic halide such as methylene chloride. The reaction is preferably conducted in an inert solvent at a temperature from 0 to 50 °C.

### Detailed Description

All references herein to the Periodic Table of the Elements and to groups thereof shall refer to the version of the Table published in the Handbook of Chemistry and Physics, CRC Press (1987) utilizing the IUPAC convention for naming groups. Group 14 metals or metalloids are silicon, germanium, tin and lead.

Preferred C₁₋₂₀ substituents on Cp* are alkyl or aryl groups of up to 10 carbons, especially methyl. Examples of suitable Cp* groups are cyclopentadienyl, tetramethylcyclopentadienyl, indenyl, and fluorenyl groups. When used herein, the terms cyclopentadienyl or cyclopentadienide, or similar terms will also be understood to refer generically to all such groups including the corresponding substituted derivatives as above defined.

Suitable neutral groups, L, include those bonded to the metal of the complex via a coordinate covalent bond as well as groups associated with the complex by van der Waals-, crystal packing-, or other bond. Examples inciude C₁₋₁₂ ethers, including cyclic ethers, such as tetrahydrofuran, amines, and phosphines. Suitable metals M' include lithium, sodium, magnesium, aluminum, copper and zinc. Examples of suitable reagents, (X)ₜ(L)ₛM'ᵤCp*H, include: C₅H₅Li, MgClC₅H₅, Mg(C₅H₅)₂, ClZnC₅H₅, Li((C₂H₅)₂O)₂Cu(CN)C₅H₅, (CH₃)₂AlC₅H₅, C₅H₅Si(CH₃)₃ and the corresponding substituted cyclopentadienyl derivatives

The metal coordination complexes prepared according to the present invention correspond to the formula: 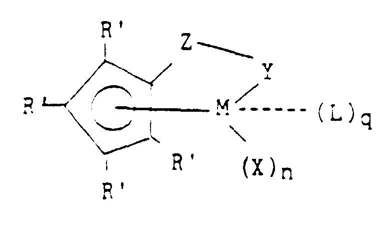 wherein
R' each occurrence is independently selected from the group consisting of hydrogen, hydrocarbyl, silyl, germyl, cyano, halo and combinations thereof having up to 20 non-hydrogen atoms or two or more R' groups together may form a ring ;
X each occurrence independently is selected from the group consisting of hydride, halo, hydrocarbyl, silyl, germyl, hydrocarbyloxy, amide, phosphide, sulfide, siloxy groups, and combinations thereof having up to 20 non-hydrogen atoms;
Y is -O-, -S-, -NR*-, or -PR*-;
M is a Group 4 metal ; and
Z is SiR*₂, CR*₂, SiR*₂SiR*₂, CR*₂CR*_{2,} CR* = CR*, CR*₂SiR*₂, GeR*₂, or BR* ;
wherein :
R* each occurrence is independently selected from the group consisting of hydrogen, cyano, halogen, hydrocarbyl, silyl, siloxy, and halogenated hydrocarbyl groups having up to 20 non-hydrogen atoms, and combinations thereof, or two or more R* groups from Z or from Y and Z form a fused ring system; and
n is 1 or 2.

Most preferred metal complexes are those wherein M is titanium or zirconium, Y is NR* and X, R*, and R' independently each occurrence are selected from the group consisting of hydrogen, halo, silyl, hydrocarbyl and combinations thereof having up to 10 carbon or silicon atoms. Most highly preferably X in at least one occurrence is independently a C₁₋₁₀ hydrocarbyl group or a C₁₋₄ di-hydrocarbylamino- or C₁₋₄ di-hydrocarbylphosphino-substituted hydrocarbyl group. Also most preferably, the metal cyclopentadienyl compounds or derivatives thereof used in step 1) are the lithium, sodium or potassium cyclopentadienides or tetramethylcyclopentadienides, and the alkali metal or alkaline earth metal or organyl derivative thereof of step 2) is potassium metal, methyl lithium, butyl lithium, phenyl lithium, isopropyl magnesium chloride, or methyl magnesium bromide.

Generally the reactions in either embodiment of the invention are conducted in a liquid diluent such as a C₅₋₂₀ aliphatic or aromatic hydrocarbons, aliphatic ethers, and mixtures thereof. The reaction is conducted under an inert atmosphere. Nitrogen, helium or similar inert gas may be employed to produce the inert atmosphere. Agitation may be employed if desired. The temperature of each reaction is generally from -200°C to 200°C, preferably from -20°C to 150°C. The various reactants may be contacted for several minutes up to several hours during the reactions of the invention.

The resulting complex may be rendered catalytically active by combining the same with an alumoxane such as methylalumoxane. Alternatively, in some cases catalytically active cationic derivatives of the neutral complexes produced by the process can be prepared by borane abstraction of an X group from the metal with, for example, trispentafluorophenyl borane. This technique involves contacting the metal coordination complex and borane compound in an inert solvent such as a C₆₋₁₀ alkane at a temperature from -20°C to 200°C. Having described the invention the following examples are provided to further illustrate the same and are not to be construed as limiting. Unless stated to the contrary, parts and percentages are based on weight. Melt indices, I₂, are measured in accordance with ASTM D-1238 at 190°C using a weight of 2.16 Kg.

### Introduction to the Examples

A number of aminocyclopentadienyl silane derivatives were prepared for use in reacting with a Group 3-10 or Lanthanide metal compound.

### Preparation 1:

### (N-t-butylamino)(dimethyl)(2,3,4,5-tetramethylcyclopentadienyl)silane

To a solution of 0.200 g (1.39 mmol) sodium 1,2,3,4-tetramethylcyclopentadienide in 8 mL tetrahydrofuran (THF) under a nitrogen atmosphere was added 0.2299 g (1.39 mmol) (N-t-butylamino)(chloro)dimethylsilane. The reaction mixture was stirred several hours. The solvent was removed, the residue was extracted with pentane and filtered. The pentane was removed under reduced pressure to give the product as a light-yellow oil. The yield was 0.3028 g (86.8 percent).

### Preparation 2:

### (N-t-butylamino)(dimethyl)(cyclopentadienyl)silane

To a solution of 0.250 g lithium cyclopentadienide (contains 9-10 mole percent lithium methyl cyclopentadienide) (total 3.41 mmol) in 6 mL THF was added 0.5752 g (3.47 mmol) (N-t-butylamino)(chloro)dimethylsilane. The reaction mixture was stirred several hours. The solvent was removed, the residue was extracted with pentane and filtered. The pentane was removed in vacuo to give the product as a pale yellow oil. The yield was 0.4675 g (70.0 percent).

### Preparation 3:

### (N-t-butylamino)(dimethyl)(cyclopentadienyl)silane

To a solution of 1.50 g (9.05 mmol) (N-t-butylamino)(chloro)dimethyisilane in 40 mL THF was added dropwise 4.5 mL of a 2.0 M solution of sodium cyclocentadienide in THF over a 20 minute period. The reaction mixture was stirred several hours. Monitoring by gas-liquid chromatograpny (GC) indicated clean formation of the product. The solvent was removed, the residue was extracted with diethyl ether and filtered. The ether was removed in vacuo to give the product as a pale yellow oil. The yield was 1.44 g (81 percent).

### Preparation 4:

### (N-t-butylamino)(dimethyl)(methylcyclopentadienyl)silane

2.300 g sodium methylcyclopentadienide (22.5 mmol) was reacted with 3.733 g (22.5 mmol) (N-t-butylamino)(chloro)dimethylsilane in 92 mL THF. The reaction mixture was stirred several hours. Monitoring by GC indicated that the reaction was complete. The solvent was removed, the residue was extracted with pentane and filtered. The pentane was removed in vacuo to give the product as a colorless oil. The yield was 3.814 g (81.0 percent).

### Preparation 5:

### (N-t-butylamino)(dimethyl)(t-butylcyclopentadienyl)silane

To a solution of 3.346 g (20.2 mmol) (N-t-butylamino)(chloro)dimethylsilane in 75 mL THF was added 3.577 g (17.7 mmol) lithium t-butylcyclopentadienide etherate. Lithium t-butylcyclopentadienide was prepared by contacting methyl lithium with 6,6-dimethylfulvene. The reaction mixture was stirred several hours. The solvent was removed, the residue was extracted with pentane and filtered. The pentane was removed in vacuo to give the product as a pale yellow oil. The yield was 2.873 g (64.6 percent).

### Preparation 6:

### (N-t-butylamino)(chloro)diphenylsilane

To a solution of 12.66 g (50.0 mmol) dichlorodiphenylsilane in 220 mL pentane was added 7.38 g (101 mmol) t-butyl amine. Thick precipitate formed. The reaction mixture was stirred overnight, then filtered. The pentane was removed in vacuo to give the product as a viscous colorless oil. The yield was 13.55 g (93.5 percent). ¹H (C₆D₆) δ 7.85 (m, 4H), 7.14 (m, 6H), 1.51 (s, 1H), 1.10(s, 9H). ¹³C(C₆D₆) δ 135.8, 134.9, 130.6, 128.2, 50.8, 33.2.

### (N-t-butylamino)(diphenyl)(2,3,4,5-tetramethylcyclopentadienyl)silane

To solution of 4.7023 g (16.2 mmol) (N-t-butylamino)(chloro)diphenylsilane in 130 mL THF was added a solution of 2.409 g (16.7 mmol) sodium 1,2,3,4-tetramethylcydopentadienide in 40 mL TH F. The reaction mixture was stirred overnight. The solvent was removed, the residue was extracted with pentane and filtered. The pentane was removed in vacuo to give the product as a creamy white solid which could be recrystallized from pentane at low temperature. The yield was 5.982 g (98.2 percent).

### Preparation 7:

### (N-t-butylamino)(dimethyl)(tetrahydrofluorenyl)silane

To a solution of 0.37 g (2.2 mmol) of (N-t-butylamino)(chloro)dimethylsilane in 30 mL of THF was added over a 15 minute period a 10 mL THF solution containing 0.39 g (2.2 mmol) of lithium tetrahydrofluorenide prepared by the lithiation of tetrahydrofluorene with n-butyl lithium. The tetrahydrofluorene in turn may be prepared according to the procedure described in J. Org. Chem. 55, p 5301-5302, (1990). The solution was allowed to stir for 5 hours for completion as shown by GC analysis. The solvent was then removed, the residue extracted with pentane and filtered. The pentane was then removed under reduced pressure to give the product as a light-yellow oil. The yield was 0.55 g (83 percent). ¹H NMR (THF-d₈)δ7.0-7.4 (m, 4H), 1.5-2.7 (m, 8H), 1.15(s, 9H), 0.10 (s, 3H), -0,14 (s, 3H). MS : 299

### Preparation 8:

### (N-t-butylamino)(dimethyl)(indenyl)silane

To a solution of 0.54 g (3.3 mmol) of (N-t-butylamino)(chloro)dimethylsilane in 50 mL of diethyl ether was added a 10 mL diethyl ether solution containing 0.40 g (3.28 mmol) of lithium indenide over a 1 hour period. The solution was allowed to stir for 24 hours for completion as shown by GC analysis. The solvent was then removed, the residue extracted with pentane and filtered. The pentane was then removed under reduced pressure to give the product as a light-yellow oil. The yield was 0.58 g (83 percent). The product's identity was confirmed by gas/liquid chromatography and mass spectroscopy.

### Preparation 9:

### (N-t-butylamino)(dimethyl)(octahydrofluorenyl)silane

To a solution of 0.46 g (2.76 mmol) of (N-t-butylamino)(chloro)dimethylsilane in 80 mL of THF was added 0.50 g (2.76 mmol) of lithium octahydrofluorenide. The lithium octahydrofluorenide was prepared by the lithiation of octahydrofluorene with n-butyl lithium The suspension was then brought to reflux for 5 minutes with consequent dissolution of the solids. After this time period the solution was allowed to cool to room temperature, GC analysis showed the reaction to be complete. The solvent was then removed, the residue extracted with pentane and filtered. The pentane was then removed under reduced pressure to give the product as a light-yellow oil. The yield was 0.73 g (92 percent). ¹H NMR (C₆D₆) δ2.8-1.5 (m, 16H), 1.13 (s, 9H), 0.16 (s, 6H). MS:303

### Preparation 10:

### (N-t-butylamino)(dimethyl)(1-methylindenyl)silane

To a solution of 1.82 g (11.0 mmol) of (N-t-butylamino)(chloro)dimethylsilane in 25 mL of diethyl ether was added a 20 mL diethyl ether solution containing 1.50 g (11.0 mmol) of lithium 1-methylindenide over a 30 minute period. Lithium 1-methyl indenide was prepared by the lithiation of 1-methyl indene with n-butyl lithium. 1-methyl indene in turn can be prepared according to the procedures disclosed in J. Org. Chem. 47, p 1051-1058, (1982). The solution was allowed to stir for 5 hours for completion as shown by GC analysis. The solvent was then removed, the residue extracted with pentane and filtered. The pentane was then removed under reduced pressure to give the product as a light-yellow oil. The yield was 2.1 g (73 percent). ¹H NMR (THF-d₈) δ7.15 (d, 1H), 7.31 (d, 1H), 7.12 (m, 2H), 6.33 (s, 1H), 3.4 (m, 1 H), 2.18 (s, 3H), 1.19 (s,9H), 0.10 (s, 3H), 0.13 (s, 3H). MS: 259

### Preparation 11:

### (N-t-butylamino)(dimethyl)(2,3,4,5-tetramethylcyclopentadienyl)silane

To a solution of 3.758 g (26.1 mmol) sodium 1,2,3,4-tetramethylcyclopentadienide in 120 mL THF was added 4.3195 g (26.1 mmol) (N-t-butylamino)(chloro)dimethylsilane. The reaction mixture was stirred overnight. The solvent was removed, the residue was extracted with pentane and filtered. The pentane was removed in vacuo to give the product as a light-yellow oil. The yield was 6.4244 g (98.0 percent).

### Preparation 12:

### t-Butylamino(chloromethyl)dimethylsilane

9.56 g (131 mmol) t-butylamine and 9.35 g (65.3 mmol) chloro(chloromethyl)dimethylsilane were combined in 120 mL ether. Thick precipitate formed. The reaction mixture was stirred several days, then filtered. The ether was removed in vacuo to give the product as a colorless liquid. Yield: 6.425 g, 54.7 percent. ¹H (C₆D₆) δ 2.57 (s, 2H), 0.99 (s, 9H), 0.54 (s, 1 H), 0.11(s, 6H). ¹³C (C₆D₆) 49.3, 33.7, 32.4,-1.1.

### (N-t-butylamino)(dimethyl)((2,3,4,5-tetramethylcyclopentadienyl)methyl)silane

A solution of 2.432 g (16.9 mmol) sodium 1,2,3,4-tetramethylcyclopentadienide in 30 mL THF was added to 3.032 g (16.9 mmol) t-butylamino(chloromethyl)dimethylsilane. Precipitate formed slowly and the reaction mixture was stirred overnight. The solvent was removed, the residue was extracted with pentane and filtered. The pentane was removed in vacuo to give the product as a light-yellow oil. The yield was 2.988 g (66.7 percent).

### Preparation 13:

### (2-methoxyphenyl)amino)dimethyl(tetramethylcyclopentadienyl)silane)

To 1.3 g (5.9 mmol) ((tetramethylcyclopentadienyl)dimethylsilyl)chloride in 50 mL tetrahydrofuran (THF) was added 0.86 g (5.9 mmol) sodium 2-methoxyanilide. The mixture was stirred overnight. The solvent was removed under reduced pressure and the residue extracted with pentane. The pentane extracts were filtered, combined, and concentrated to give a pale yellow liquid. Yield 1.4 g (79 percent). ¹H NMR (benzene-d₆) δ 6.91 (m, 2.2), 6.74 (m, 1.1), 6.57 (d, 1.1, J = 9), 4.25 (s, 1), 3.32 (s, 3.7), 1.93 (s,6.7), 1.80 (s, 6.8), 0.13(s, 6.3).

### Preparation 14:

### (4-fluorophenyl(amino)dimethyl(tetramethylcyclopentadienyl)silane

Equimolar quantities of ((tetramethylcyclopentadienyl)dimethylsilyl)chloride and lithium 4-fluorophenyl anilide were combined in THF and the mixture stirred overnight. The solvent was removed under reduced pressure. ¹H NMR (benzene-d₆) δ 6.79 (m, 2.5), 6.33 (m, 2.4), 2.95 (s,1), 2.90 (s, 1), 1.87 (s, 6.9), 1.79 (s, 6.9), 0.02 (s, 5.8).

### COMPLEX PREPARATION

### Example 1:

### Dilithium (tert-butylamido)(dimethyl)(tetramethylcyclopentadienyl)silane

To a solution of 3.000 g (11.98 mmol) of the neutral ligand HN-t-BuSiMe₂C₅Me₄H of Preparation 1 in 100 mL ether was slowly added 9.21 mL of 2.6 M (23.95 mmol) butyl lithium in mixed C₆ alkane solvent. A white precipitate formed and the reaction mixture was stirred overnight, then filtered. The solid was washed several times with ether then dried under reduced pressure to give the product as a white powder. The yield was 3.134 g (99.8 percent).

### (Tert-butylamido)dimethyl(tetramethyl-η⁵-cyclopentadienyl)silane titanium dichloride

0.721 g (3.80 mmol) Of TiCl₄ was added to 30 mL frozen (-196°C) THF. The mixture was allowed to warm to -78°C (dry ice bath). To the resulting yellow solution was slowly added a solution of 1.000 g (3.80 mmol) dilithium (tert-butylamido)(dimethyl)tetra-methylcyclopentadienyl)silane in 30 mL THF. The solution was allowed to warm to room temperature while stirring overnight. The solvent was removed from the resulting very dark solution. The residue was extracted with pentane and filtered. Cooling in a freezer caused the separation of a very soluble dark reddish-brown material from a light yellow-green crystalline solid. The solid was filtered out and recrystallized from pentane to give the olive-green product. The yield was 0.143 g, 10.2 percent.

### Example 2:

### Dilithium (N-t-butylamido)(2,3,4,5-tetramethylcyclopentadienyl)(diphenyl)silane

To a solution of 5.982 g (15.93 mmol) (N-t-butylamino)(2,3,4,5-tetramethylcyclopentadienyl)(diphenyl)silane (Preparation 6) in 100 mL ether was slowly added 22.06 mL of 1.48 M (32.65 mmol) butyl lithium in mixed hexane solvent. The resulting yellow solution was stirred overnight, then filtered from a small amount of precipitate and the solvent was removed. The solid was slurried in pentane, filtered and washed with pentane, then dried in vacuo to give the product as a white powder as a 0.5 diethyl ether solvate (by NMR).The yield was 6.784 (100 percent). ¹H (not including solvate peaks) (THF d-8) δ 7.78 - 7.19 (3 m, 10H), 1.93 (s, 6H), 1.83 (s, 6H), 1.08 (s, 9H).

### [(N-t-butylamido)(diphenyl)(tetramethyl-η⁵-cyclopentadienyl)silane]titanium dichloride

A flask was charged with 0.7701 g (1.99 mmol) dilithium (N-t-butylamido)(2,3,4,5-tetramethylcyclopentadienyl)(diphenyl)silane and 0.7365 g (1.99 mmol) TiCl₃ (THF)₃. To this was added 80 mL THF. After the solution was stirred for 10 minutes, 0.3040 g (1.09 mmol) PbCl₂ was added and the solution was stirred for several hours. The initially deep brown-black solution turned orange-red. The solution was filtered and the solvent was removed. The residue was extracted with pentane and filtered and the solvent was removed to give a glassy yellow solid. The compound was purified by slurrying in pentane and collecting on a filter and drying under vacuum. The yield of lemon-yellow colored powder was 0.3054 g, 31.2 percent ¹H (C₆D₆) 7.84 - 7.81 (m, 4H), 7.19 - 7.17 (m, 6H), 1.95 (s, 6H), 1.81(s, 6H), 1.67 (s, 9H)¹³C(C₆D₆) 142.8,138.8,136.3, 135.6, 130.6,128.3, 104.6, 62.0, 33.5, 17,1, 13.1.

### Example 3:

### Dilithium (N-t-butylamido)(dimethyl)((2,3,4,5-tetramethylcydopentadienyl)methyl)silane

To a solution of 2.988 g (11.3 mmol) (N-t-butylamino)(dimethyl)((2,3,4,5-tetramethylcyclopentadienyl)methyl)silane (Preparation 12) in 70 mL ether was slowly added 15.90 mL of 1.416 M (22.5 mmol) butyl lithium in hexanes under gas evolution. The resulting yellow solution was stirred overnight and the solvent was removed from the pale orange solution. The resulting solid was slurried in pentane, filtered and washed with pentane, then dried in vacuo to give the product as a light orange powder in essentially quantitative yield.

### [(N-t-butylamido)(dimethyl)(tetramethyl-η⁵-cyclopentadienylmethyl)silane]titanium dichloride

A flask was charged with 2.018 g (7.27 mmol) dilithium (N-t-butylamido)(dimethyl)(2,3,4,5-tetramethylcyclopentadienylmethyl)silane and 2.696 g (7.27 mmol) TiCl₃ (THF)₃. To this was added 70 mL THF. After the solution was stirred for 10 minutes, 1.062 g (3.81 mmol) PbCl₂was added to the very dark solution and the reaction mixture was stirred overnight. The deep red-brown solution was filtered and the solvent was removed. The residue was extracted with pentane and filtered. After concentration, the solution was cooled in a -35°C freezer to induce crystallization. The product was recrystallized twice from pentane. Yield of bright red crystalline product was 0.6565 g, 23.6 percent ¹H (C₆D₆) δ 2.06 (s, 6H), 1.94 (s, 6H), 1.89 (s, 2H), 1,58 (s, 9H), 0.30 (s, 6H) ¹³C (C₆D₆) δ 132.8, 131.8, 128.4, 62.5, 33.4, 17.5, 13.9, 13.5, 7.6.

### Example 4:

### (N-t-butylamido)dimethyl(tetramethyl-η⁵-cyclopentadienyl)silanetitanium dibenzyl

In an inert atmosphere dry box titanium tetrabenzyl (0.328 g, 0.8 mmol) was loaded into a 100 ml flask and dissolved into 40 ml dry, degassed pentane. To this solution was added 0.2 g (0.8 mmol) of the neutral ligand, (N-t-butylamino)(dimethyl)(2,3,4,5-tetramethylcyclopentadienyl)silane, of Preparation 1. The reaction flask was placed in an oil bath at 55-60°C for 12 hours. After heating, the solvent was removed under reduced pressure giving (N-t-butylamido)dimethyl(tetramethyl-η⁵-cyclopentadienyl)silanetitanium dibenzyl. Yield was 90 percent based upon spectroscopic data. Further purification is accomplished by recrystallization from pentane. ¹H NMR, (C₆D₆, ppm): 7.18-6.90 (m, C₆H₅, 10H); 2.581, 2.249 (AB, CH₂C₆H₅, 4H, J_{HH} = 8 Hz); 1.806, 1.631 (s, C₅(CH₃)₄, 6H each); 1.426.

### Polymerization

A stainless steel shot tank was charged with 500 µL (5.0 µmol) of a 0.010 M toluene solution of (tert-butylamido)dimethyl (tetramethyl-η⁵-cyclopentadienyl)silanetitanium dichloride and 2.5 mL of toluene in an argon filled glove box. In a second shot tank, 5.0 mL of a 1.0 M solution of methylalumoxane (MAO) cocatalyst in toluene was added to 92 mL of toluene. Both shot tanks were sealed, removed from the glove box and attached to a 600 mL pressure vessel. The pressure vessel was evacuated and flushed with argon and then flushed with ethylene. The cocatalyst solution was added to the pressure vessel and the contents heated to 89°C under an ethylene pressure of 620 kPa (90 psig). The catalyst solution was added to the reactor at this time. The temperature rose to 109°C within seconds as a result of an exothermic reaction. The ethylene pressure was regulated between 1241-1275 kPa (180-185 psig). After about 0.5 hours the reactor temperature had increased to about 110°C and the uptake of ethylene increased. After 1.0 hours ethylene feed was discontinued, the reactor was vented to the atmosphere, and allowed to cool. The pressure vessel was opened, quenched with methanol, and the polymer was isolated. After removing the volatile components, the yield of crystalline polyethylene was 24 g.

## Claims

1. A process for preparing a metal coordination complex corresponding to the formula: 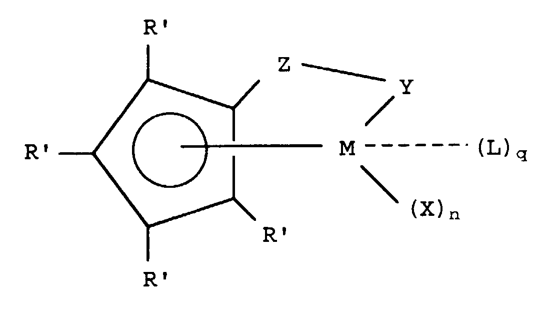 wherein
R' each occurrence is independently selected from the group consisting of hydrogen, hydrocarbyl, silyl, germyl, cyano, halo and combinations thereof having up to 20 non-hydrogen atoms or two or more R' groups together may form a ring;
X each occurrence independently is selected from the group consisting of hydride, halo, hydrocarbyl, silyl, germyl, hydrocarbyloxy, amide, phosphide, sulfide, siloxy and combinations thereof having up to 20 non-hydrogen atoms, and C₁₋₄ di-hydrocarbylamino- or C₁₋₄ di-hydrocarbylphosphino-substituted C₁₋₁₀ hydrocarbyl groups;
Y is -O-, -S-, -NR*-, or -PR*-;
M is a Group 4 metal; and
Z is SiR*₂, CR*₂, SiR*₂SiR*₂, CR*₂CR*₂, CR*=CR*, CR*₂SiR*₂, GeR*₂ or BR*;
wherein:
R* each occurrence is independently selected from the group consisting of hydrogen, cyano, halogen, and hydrocarbyl, silyl, siloxy, and halogenated hydrocarbyl groups having up to 20 non-hydrogen atoms, and combinations thereof, or two or more R* groups from Z, or both Y and Z form a fused ring system;
n is 1 or 2; and
L is a neutral group associated with the complex with q being a rational number from 0 to 3;
said process comprising:
contacting a substituted cyclopentadiene compound corresponding to the formule: Cp*H-Z-YH;
wherein:
Cp* is 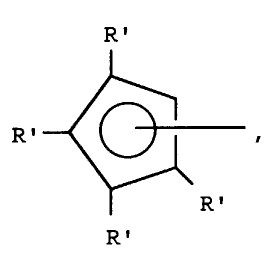 and Z and Y are as previously defined, with a metal compound corresponding to the formula: MXₘL_{q}, wherein M, X, L and q are as above defined, and m is equal to n+2.

2. A process according to claim 1 wherein the substituted cyclopentadiene compound is prepared by contacting a halogenated compound of the formula: X'ZYH, wherein z and Y are as previously defined, and X' is halo, with a metal cyclopentadienyl compound or a derivative thereof corresponding to the formula: (X)ₜ(L)ₛM'ᵤCP*H, wherein M' independently each occurrence is a metal selected from the group consisting of alkali metals, alkaline earth metals, Group 12 metals, Group 14 metals or metalloids, aluminum, and copper; and Cp*, X and L are as defined in claim 1, and t, s, and u, independently each occurrence, are rational numbers from 0 to 3, to form the substituted cyclopentadiene compound.

3. A process according to claim 1 wherein
X independently each occurrence is an anionic ligand group and in at least two occurrences X is a hydride, amide or phosphide group, or a hydrocarbyl group, or a hydrocarbyl group substituted with one or more halo, silyl, germyl, hydrocarbyloxy, amine, phosphine, sulfide, or siloxy groups to form the metal coordination complex.

4. A process according to any one of claims 1-3, wherein Y is NR* where R* is hydrogen, an alkyl, an aryl, a silyl, a halogenated alkyl, or a halogenated aryl group having up to 20 non-hydrogen atoms.

5. A process according to any one of claims 1-4, wherein M is titanium or zirconium.

6. A process according to any one of claims 1-5, wherein the metal coordination complex is
(N-t-butylamino) (dimethyl)(η⁵-2,3,4,5-tetramethylcyclopentadienyl)silane zirconium dichloride,
(N-t-butylamido) (dimethyl)(η⁵-2,3,4,5-tetramethylcyclopentadienyl)silane titanium dichloride,
(N-t-butylamido) (dimethyl) (η⁵-2,3,4,5-tetramethylcyclopentadienyl)silane zirconium dibenzyl, or
(N-t-butylamido) (dimethyl)(η⁵-2,3,4,5-tetramethylcyclopentadienyl)silane titanium dibenzyl.

## Patentansprüche

1. Verfahren zur Herstellung eines Hetallkoordinationskomplexes, der der Formel entspricht: 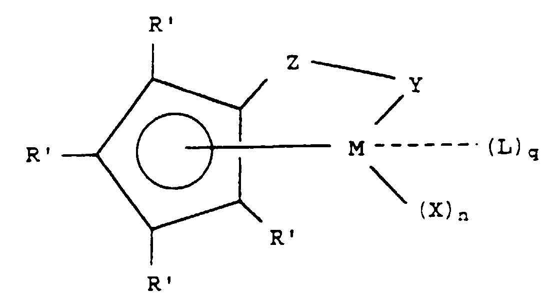 worin R' bei jedem Auftreten unabhängig voneinander ausgewählt ist aus der Gruppe, bestehend aus Wasserstoff, Hydrocarbyl, Silyl, Germyl, Cyano, Halogen und Kombinationen davon mit bis zu 20 Nichtwasserstoffatomen oder zwei oder mehr R'-Gruppen zusammen einen Ring ausbilden können,
X bei jedem Auftreten unabhängig voneinander ausgewählt ist aus der Gruppe, bestehend aus Hydrid, Halogen, Hydrocarbyl, Silyl, Germyl, Hydrocarbyloxy, Amid, Phosphid, Sulfid, Siloxy und Kombinationen davon mit bis zu 20 Nichtwasserstoffatomen, und C₁₋₄-Di-hydrocarbylamino- oder C₁₋₄-Di-hydrocarbylphosphinosubstituierte C₁₋₁₀-Hydrocarbylgruppen,
Y gleich -O-, -S-, -NR*- oder -PR*- ist,
M ein Metall der vierten Gruppe ist und
Z gleich SiR*₂, CR*₂, SiR*₂SiR*₂, CR*₂CR*₂, CR*=CR*, CR*₂SiR*₂, GeR*₂ oder BR* ist,
worin R* bei jedem Auftreten unabhängig voneinander ausgewählt ist aus der Gruppe, bestehend aus Wasserstoff, Cyano, Halogen, Hydrocarbyl, Silyl, Siloxy und halogenierten Hydrocarbylgruppen mit bis zu 20 Nichtwasserstoffatomen und Kombinationen davon oder zwei oder mehrere R*-Gruppen von Z oder von sowohl Y als auch Z ein kondensiertes Ringsystem ausbilden,
n gleich 1 oder 2 ist und
L eine neutrale Gruppe ist, die mit dem Komplex assoziiert ist, wobei q eine rationale Zahl von 0 bis 3 ist,
wobei dieses Verfahren umfaßt:
Inkontaktbringen einer substituierten Cyclopentadienverbindung. die der Formel CP*H-Z-YH entspricht, worin
CP* 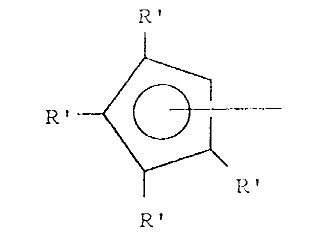 ist und Z und Y wie vorhergehend definiert sind,
mit einer Metallverbindung, die der Formel HXₘL_{q} entspricht, worin M, X, L und q wie oben definiert sind und m gleich n+2 ist.

2. Verfahren nach Anspruch 1, wobei die substituierte Cyclopentadienverbindung durch Inkontaktbringen einer halogenierten Verbindung der Formel: X'ZYH, worin Z und Y wie vorhergehend definiert sind und X' Halogen ist, mit einer Metallcyclopentadienylverbindung oder einem Derivat davon, entsprechend der Formel: (X)ₜ(L)ₛH'ᵤCP*H, worin M' bei jedem Auftreten unabhängig voneinander ein Metall, ausgewählt aus der Gruppe, bestehend aus Alkalimetallen, Erdalkalimetallen, Metallen der Gruppe 12, Metallen oder Metalloiden der Gruppe 14, Aluminium und Kupfer, ist und Cp*, X und L wie in Anspruch 1 definiert sind und t, s und u unabhängig bei jedem Auftreten rationale Zahlen von 0 bis 3 sind, um eine substituierte Cyclopentadienverbindung auszubilden, hergestellt wird.

3. Verfahren nach Anspruch 1, worin X unabhängig bei jedem Auftreten eine anionische Ligandengruppe ist und X in wenigstens zwei Fällen eine Hydrid-, Amid- oder Phosphidgruppe oder eine Hydrocarbylgruppe oder eine Hydrocarbylgruppe, die mit einer oder mehreren Halogen-, Silyl-, Germyl-, Hydrocarbyloxy-, Amin-, Phosphin-, Sulfid- oder Siloxygruppen substituiert ist, um einen Metallkoordinationskomplex auszubilden.

4. Verfahren nach einem der Ansprüche 1 bis 3, wobei Y gleich NR* ist, worin R* Wasserstoff, eine Alkyl-, eine Aryl-, eine Silyl-, eine halogenierte Alkyl- oder eine halogenierte Arylgruppe mit bis zu 20 Nichtwasserstoffatomen ist.

5. Verfahren nach einem der Ansprüche 1 bis 4, wobei M Titan oder Zirconium ist.

6. Verfahren nach einem der Ansprüche 1 bis 5, wobei der Metallkoordinationskomplex
(N-t-Butylamido)(dimethyl)(η⁵-2,3,4,5-tetramethylcyclopentadienyl)silanzirconiumdichlorid,
(N-t-Butylamido)(dimethyl)(η⁵-2,3,4,5-tetramethylcyclopentadienyl)silantitandichlorid,
(N-t-Butylamido)(dimethyl)(η⁵-2,3,4,5-tetramethylcyclopentadienyl)silanzirconiumdibenzyl oder
(N-t-Butylamido)(dimethyl)(η⁵-2,3,4,5-tetramethylcyclopentadienyl)silantitandibenzyl ist.

## Revendications

1. Procédé pour préparer un complexe de coordination métallique correspondant à la formule: 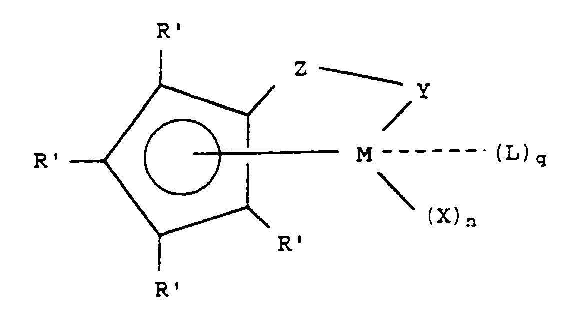 dans laquelle
chaque R' est indépendamment choisi dans le groupe formé par un atome d'hydrogène, les radicaux hydrocarbyle, silyle, germyle, cyano, halogéno et leurs combinaisons ayant jusqu'à 20 atomes différents de l'hydrogène, ou deux ou plusieurs groupes R' peuvent former ensemble un cycle;
chaque X est indépendamment choisi dans le groupe formé par les radicaux hydrure, halogéno, hydrocarbyle, silyle, germyle, hydrocarbyloxy, amide, phosphure, sulfure, siloxy et leurs combinaisons ayant jusqu'à 20 atomes différents de l'hydrogène, et les groupes hydrocarbyle en C₁ à C₁₀ substitués par un dihydrocarbylamino en C₁ à C₄ ou un dihydrocarbylphosphino en C₁ à C₄;
Y est -O-, -S-, -NR*- ou -PR*-;
M est un métal du Groupe 4; et
Z est SiR*₂, CR*₂, SiR*₂SiR*₂, CR*₂CR*₂, CR*=CR*, CR*₂SiR*₂, GeR*₂ ou BR*;
dans lesquels:
chaque R* est indépendamment choisi dans le groupe formé par un atome d'hydrogène, un radical cyano, halogéno et hydrocarbyle, silyle, siloxy et hydrocarbyle halogénés ayant jusqu'à 20 atomes différents de l'hydrogène, et leurs combinaisons, ou deux ou plusieurs groupes R* provenant de Z, ou à la fois de Y et Z forment tous deux un système cyclique condensé;
n vaut 1 ou 2; et
L est un groupe neutre associé au complexe, q étant un nombre rationnel de 0 à 3;
ledit procédé consistant:
- à mettre en contact un composé cyclopentadiène substitué correspondant à la formule: Cp*H-Z-YH;
dans laquelle:
Cp* est 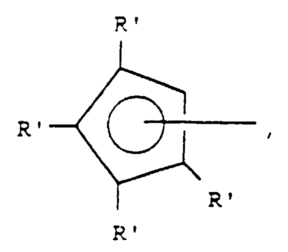 et Z et Y sont tels que définis précédemment, avec un composé métallique correspondant à la formule: MXₘL_{q}, dans laquelle M, X, L et q sont tels que définis ci-dessus, et m est égal à n+2.

2. Procédé selon la revendication 1, dans lequel le composé cyclopentadiène substitué est préparé en mettant en contact un composé halogéné de formule: X'ZYH, dans laquelle Z et Y sont tels que définis précédemment, et X' est un radical halogéno, avec un composé cyclopentadiényle métallique ou un de ses dérivés correspondant à la formule: (X)ₜ(L)ₛM'ᵤCp*H, dans laquelle chaque M' est indépendamment un métal choisi dans le groupe formé par les métaux alcalins, les métaux alcalino-terreux, les métaux du Groupe 12, les métaux ou les métalloïdes du Groupe 14, l'aluminium et le cuivre; et Cp*, X et L sont tels que définis dans la revendication 1, et t, s et u, indépendamment dans chaque cas, sont des nombres rationnels de 0 à 3, pour former le composé cyclopentadiène substitué.

3. Procédé selon la revendication 1, dans lequel
chaque X est indépendamment un groupe ligand anionique et au moins deux X sont un groupe hydrure, amide ou phosphure ou un groupe hydrocarbyle, ou hydrocarbyle substitué par un ou plusieurs groupes halogéno, silyle, germyle, hydrocarbyloxy, amine, phosphine, sulfure ou siloxy pour former le complexe de coordination métallique.

4. Procédé selon l'une des revendications 1 à 3, dans lequel Y est NR*, où R* est un atome d'hydrogène, un groupe alkyle, aryle, silyle, alkyle halogéné ou aryle halogéné ayant jusqu'à 20 atomes différents de l'hydrogène.

5. Procédé selon l'une des revendications 1 à 4, dans lequel M est le titane ou le zirconium.

6. Procédé selon l'une des revendications 1 à 5, dans lequel le complexe de coordination métallique est:
- le dichlorure de (N-t-butylamino)(diméthyl)(η⁵-2,3,4,5-tétraméthylcyclopentadiényl)silane-zirconium;
- le dichlorure de (N-t-butylamido)(diméthyl)(η⁵-2,3,4,5-tétraméthylcyclopentadiényl)silane-titane;
- (N-t-butylamido) (diméthyl) (η⁵-2,3,4,5-tétraméthylcyclopentadiényl)silane-zirconium dibenzylé; ou
- (N-t-butylamido)(diméthyl) (η⁵-2,3,4,5-tétraméthylcyclopentadiényl)silane-titane dibenzylé.
